# EUROPEAN PATENT APPLICATION

(11) **EP 4 827 237 A1**
(43) Date of publication of application: **21.10.2026**
(21) Application number: 23961490.2
(22) Date of filing: 14.12.2023
(51) Int. Cl.: H04W 88/10

(54) **COMMUNICATION DEVICE AND COMMUNICATION METHOD**

(71) Applicant: NTT DOCOMO, INC., Tokyo 100-6150 (JP)
(72) Inventor: YOSHIOKA Shohei, Tokyo 100-6150 (JP); OKANO Mayuko, Tokyo 100-6150 (JP); KUMAGAI Shinya, Tokyo 100-6150 (JP); TANIZAKI Yuta, Tokyo 100-6150 (JP); NAGATA Satoshi, Tokyo 100-6150 (JP); MIN Tianyang, Tokyo 100-6150 (JP); INOUE Shoki, Tokyo 100-6150 (JP)
(74) Representative: Hoffmann Eitle
(86) International application number: PCT/JP2023/044869
(87) International publication number: WO 2025/126426

(57) **Abstract**

A communication device executes communication with a first communication network and a second communication network, executes radio communication with a terminal, and executes a specific operation as a radio base station that accommodates a terminal belonging to a mobile communication network including the first communication network, and a terminal belonging to another mobile communication network other than the mobile communication network. The communication device transmits a connection signal corresponding to each of the mobile communication networks to the terminal.

## Description

### TECHNICAL FIELD

The present disclosure relates to a communication device and a communication method capable of executing radio communication with a terminal (User Equipment, UE).

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

For example, in a white paper on 6G (Non-Patent Literature 1), a more flexible network function arrangement and the like are studied regarding a network architecture. For example, in 6G, as one form of architecture of a mobile communication network (PLMN: Public Land Mobile Network), introduction of a Network Controlled Access Point (NCAP, tentative name) is planned as an access point (communication device) that can be installed under the mobile communication network and proactively controlled by a network operator.

In addition, in order to further improve the utilization efficiency of existing frequency bands (which may include newly allocated high frequency bands), network sharing (resource sharing) has been studied in which a plurality of telecommunications carriers (network operators) share a Radio Access Network (RAN) and realize the installation of a large number of radio base stations by sharing the investment cost for the network (Non-Patent Literature 2).

### CITATION LIST

### NON-PATENT LITERATURE

Non-Patent Literature 1: NTT DOCOMO, "DOCOMO 6G White Paper, Version 5.0", [online], January 2023, Internet
URL:https://www.docomo.ne.jp/binary/pdf/corporate/technology/whitepaper_6g/DOCOMO_6 G_White_PaperJP_20221116.pdf
Non-Patent Literature 2: 3GPP TR 22.951 V17.0.0, 3rd Generation Partnership Project; Technical Specification Group Services and System Aspects; Service aspects and requirements for network sharing (Release 17), 3GPP, March 2022

### SUMMARY OF INVENTION

When the network sharing as described above is applied to a mobile communication network including an NCAP (which may be referred to as an NCAP network), a UE can connect (access) widely without being limited to a specific mobile communication network (PLMN).

On the other hand, in such a case, it is necessary to clarify resources such as a frequency band to be used. For example, available frequency bands may differ between PLMNs, or the same frequency band may be shared between PLMNs.

Therefore, the following disclosure has been made in view of such a situation, and an object thereof is to provide a communication device and a communication method that enable a terminal to connect widely without limiting a mobile communication network (PLMN) via the NCAP network even when the network sharing is applied.

One aspect of the present disclosure is a communication device (NCAP 100) including a communication unit (first communication unit 110, second communication unit 120, third communication unit 130) that executes communication with a first communication network and a second communication network, and executes radio communication with a terminal (UE 200), and a control unit (control unit 140) that executes a specific operation as a radio base station (gNB 50) that accommodates the terminal belonging to a mobile communication network including the first communication network, and the terminal belonging to another mobile communication network other than the mobile communication network, wherein the communication unit transmits a connection signal corresponding to each of the mobile communication networks to the terminal.

### BRIEF DESCRIPTION OF DRAWINGS

[Fig. 1] Fig. 1 is an overall schematic configuration diagram of a radio communication system 10.
[Fig. 2] Fig. 2 is a functional block configuration diagram of an NCAP 100.
[Fig. 3] Fig. 3 is a functional block configuration diagram of a UE 200.
[Fig. 4] Fig. 4 is a functional block configuration diagram of a gNB 50.
[Fig. 5] Fig. 5 is a diagram showing an arrangement example (part 1) of a C-plane function and a U-plane function of a CN in a mobile communication network configured using the NCAP 100.
[Fig. 6] Fig. 6 is a diagram showing an arrangement example (part 2) of a C-plane function and a U-plane function of a CN in a mobile communication network configured using the NCAP 100.
[Fig. 7] Fig. 7 is a diagram showing a control operation example (part 1) of the NCAP 100 with a plurality of PLMNs.
[Fig. 8] Fig. 8 is a diagram showing a control operation example (part 2) of the NCAP 100 with a plurality of PLMNs.
[Fig. 9] Fig. 9 is a diagram showing an example of a communication sequence related to construction of an NCAP network.
[Fig. 10] Fig. 10 is a diagram showing an example of a hardware configuration of the NCAP 100, the UE 200, and the gNB 50.
[Fig. 11] Fig. 11 is a diagram showing a configuration example of a vehicle 2001.

### DESCRIPTION OF EMBODIMENTS

Hereinafter, an embodiment will be described based on the drawings. Note that the same or similar reference numerals are attached to the same functions and configurations, and the description thereof will be omitted as appropriate.

### (1) Overall Schematic Configuration of Radio Communication System

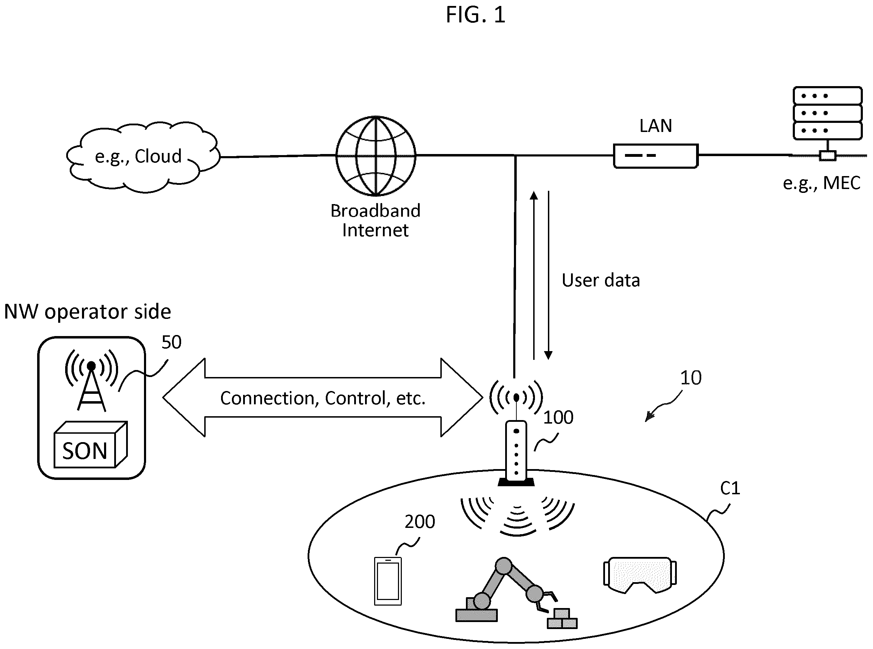

Fig. 1 is an overall schematic configuration diagram of a radio communication system 10 according to the present embodiment. The radio communication system 10 is a radio communication system according to a system called Beyond 5G, 5G Evolution, or 6G (hereinafter referred to as 6G), and includes a radio base station 50 (hereinafter, gNB 50) and a terminal 200 (hereinafter, UE 200, User Equipment, UE). Note that the radio communication system 10 may be a radio communication system according to specifications other than 6G, such as 5G New Radio (NR).

The gNB 50 is a radio base station according to 6G, and executes radio communication according to 6G with the UE 200. The NCAP 100 and the UE 200 can support Massive MIMO (Multiple-Input Multiple-Output) that generates a more highly directional antenna beam by controlling radio signals transmitted from a plurality of antenna elements, carrier aggregation (CA) that bundles and uses a plurality of component carriers (CCs), and dual connectivity (DC) that executes communication simultaneously between the UE and each of two or more RAN Nodes.

The radio communication system 10 includes a Network Controlled Access Point 100 (hereinafter, NCAP 100) in addition to the gNB 50. The NCAP 100 is a kind of communication device called an access point (AP), and can provide the same functions as the radio base station. NCAP is a tentative name, and may be called by another similar name such as a communication node, a RAN node, or a relay device.

The NCAP 100 may be installed by an operating entity (which may be called a network operator, a mobile operator, or the like) of the radio communication system 10 (mobile communication system), but may be freely installed by a subscriber (customer) of a communication service provided by the radio communication system 10. Note that the NCAP 100 may be defined as a femto base station, or may be defined as one kind of UE.

Note that at least one of a frequency band (which may include a band combination and the like), the number of antenna beams, the number of MIMO layers, a transmission power, and the like supported by the NCAP 100 may be more limited than the gNB 50. Since the NCAP 100 can provide substantially the same functions as the gNB 50, it can form a cell C1 and accommodate the UE 200.

The UE 200 is typically a mobile terminal such as a smartphone, but may be a device for Industrial Internet of Things (IIoT) or URLLC (Ultra-Reliable and Low Latency Communications).

The radio communication system 10 may be configured by a radio access network (RAN) configured by a plurality of RAN Nodes such as the gNB 50 using a 6G radio access technology (RAT), and a core network according to 6G. Note that the RAN and the core network may be simply expressed as a "network".

The core network (CN) may be connected to the RAN, and is a network configured by an exchange, a subscriber information management device, and the like. The UE 200 can execute communication with the core network via the RAN.

The UE 200 can connect to a plurality of mobile communication networks (PLMNs: Public Land Mobile Networks). The PLMN may be interpreted in a broad sense as equivalent to a network operator (operating entity) that provides a service using the radio communication system 10. The PLMN includes a UE, a gNB, a RAN, a CN, and the like, and may be interpreted as being configured by various nodes used to provide various services related to mobile communication. The UE 200 may belong to (contract with) a plurality of PLMNs, or may be able to connect to a plurality of PLMNs by roaming.

In the radio communication system 10, a control plane (C-plane) function and a user plane (U-plane) function (UPF: User Plane Function) are defined.

The C-plane may mean a series of control processes exchanged mainly for establishing communication and the like. The U-plane may mean transmission and reception processing of user data.

In the core network (and a part of the RAN), a concept of CUPS (Control and User Plane Separation) in which the functions of the C-plane and the U-plane are clearly separated may be introduced.

The C-plane function of the core network may include an Access and Mobility Management Function (AMF) that provides an access and mobility management function of the UE 200, a Session Management Function (SMF) that provides a session management function, and the like. Note that the AMF and the SMF may be called by other names.

For the NCAP 100, connection with the RAN and various controls may be executed from the network operator side via the C-plane function. At least a part of such connection and/or control may be realized using a framework of Self-Organizing Networks (SON). SON may be interpreted as a self-optimizing function of the mobile communication network including automatic setting at the time of installation of the gNB 50 and automatic optimization of parameters.

The NCAP 100 can thus connect to the gNB 50 via the C-plane function. The connection between the gNB 50 and the NCAP 100 may be connected via the RAN (RAT), or may be connected via a wired network. Further, the NCAP 100 can provide a communication path to a broadband Internet and a server for MEC (Multiaccess Edge Computing) to the UE 200 via a local area network (LAN). MEC is a mechanism for deploying servers, storage, and the like at positions closer to users (subscribers) in the mobile communication network. Further, various cloud services may be accessible via the broadband Internet.

### (2) Functional Block Configuration of Radio Communication System

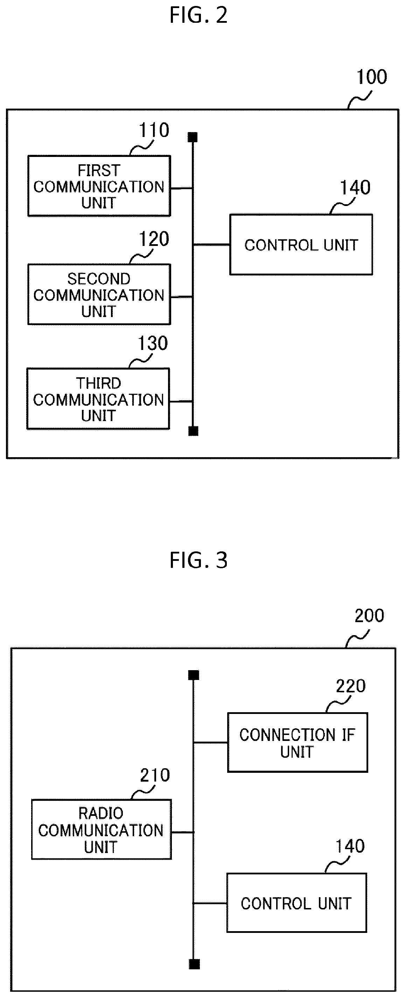

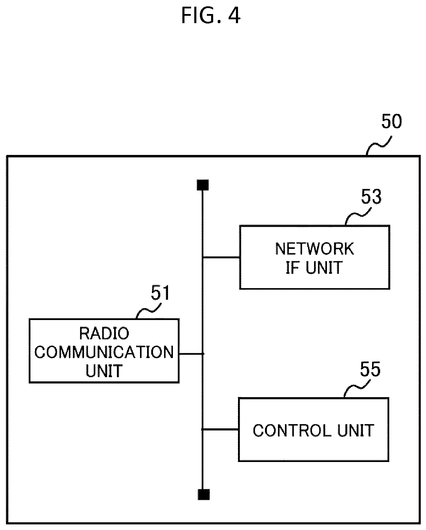

Next, a functional block configuration of the radio communication system 10 will be described. Specifically, functional block configurations of the NCAP 100 and the UE 200 will be described. Fig. 2 is a functional block configuration diagram of the NCAP 100. Fig. 3 is a functional block configuration diagram of the UE 200. Fig. 4 is a functional block configuration diagram of the gNB 50.

### (2.1) NCAP 100

As illustrated in Fig. 2, the NCAP 100 comprises a first communication unit 110, a second communication unit 120, a third communication unit 130, and a control unit 140.

The first communication unit 110 executes communication with the network operator side. Specifically, the first communication unit 110 executes communication with a RAN node including the gNB 50. For connection with the gNB 50 (and other RAN nodes), a radio access technology (RAT) may be used, or a wired network other than the RAT may be used. A network on the network operator side configured by RAN nodes including the gNB 50 may be referred to as a first communication network. That is, the first communication unit 110 executes communication with the first communication network using the RAT. The network on the network operator side may be interpreted as a concept including SON.

The second communication unit 120 executes communication with a local area network (LAN) side. Specifically, the second communication unit 120 executes communication via a communication device such as a router configuring the LAN, and the broadband Internet (may be simply abbreviated as the Internet).

For connection with the LAN, a wireless LAN such as Wi-Fi (registered trademark) may be used, or a wired LAN such as Ethernet (registered trademark) may be used. The network on the LAN side may be referred to as a second communication network. That is, the second communication unit 120 executes communication with the second communication network using a LAN technology.

In addition, the second communication unit 120 may execute communication with the network operator side via the LAN (second communication network) and the broadband Internet. The communication is not limited to the U-plane function, and may include communication related to the C-plane function.

The third communication unit 130 executes communication with the UE 200 side. Specifically, the third communication unit 130 executes radio communication with the UE 200 using a radio access technology (RAT). In this case, the NCAP 100 may provide the UE 200 with the same functions as the gNB 50. In the present embodiment, the third communication unit 130 configures a communication unit that executes radio communication with the UE 200.

The third communication unit 130 may transmit a connection signal corresponding to each of the mobile communication networks (PLMNs) to the UE 200. Here, the connection signal may be interpreted as a signal necessary for the UE 200 to connect to a specific PLMN. For example, the connection signal may include a synchronization signal (SSB (SS (Synchronization Signal)/PBCH (Physical Broadcast CHannel))) and a broadcast signal (MIB: Master Information Block, SIB: System Information Block) in a downlink (DL). Further, the connection signal may include a signal received by the NCAP 100 from the UE 200, for example, an uplink (UL) signal for initial access such as PRACH (Physical Random Access Channel).

The third communication unit 130 may transmit or receive an independent connection signal for each PLMN. Specifically, the third communication unit 130 may transmit a separate DL connection signal to the UE 200 for each PLMN, and receive a separate UL connection signal from the UE 200 for each PLMN. At least one of a frequency resource and a time resource may be different for each PLMN. Further, the connection signal may target only any PLMN.

Alternatively, the third communication unit 130 may transmit or receive a connection signal common to a plurality of PLMNs. Specifically, the third communication unit 130 may transmit a DL connection signal common to the plurality of PLMNs to the UE 200, and receive a UL connection signal common to the plurality of PLMNs from the UE 200.

The control unit 140 controls each functional block configuring the NCAP 100. In particular, in the present embodiment, the control unit 140 can control the behavior of the communication device of the NCAP 100. Specifically, the control unit 140 can execute an operation (hereinafter, a specific operation) as a network device (NW device) in which the NCAP 100 accommodates the UE 200.

The network device is not particularly limited as to its device type as long as it accommodates the UE 200 (intends to connect to the UE 200 and execute radio communication). Here, a network device such as a radio base station (gNB 50) may be intended, and the control unit 140 may execute a specific operation (may be referred to as "operation X") as a radio base station that accommodates the UE 200.

In the present embodiment, the control unit 140 can execute a specific operation as a radio base station that accommodates the UE 200 under at least one of a mobile communication network (specific mobile communication network) including a network on the network operator side (first communication network) and another mobile communication network other than the mobile communication network. Specifically, the NCAP 100 may be allowed to operate as belonging to one or more mobile communication networks (PLMNs), that is, belonging to (being under) two or more PLMNs at the same time. In addition, the UE 200 may be allowed to connect to the NCAP 100 regardless of the PLMN to which it belongs. Alternatively, the UE 200 may be allowed to connect to the NCAP 100 associated with the PLMN to which it belongs.

The control unit 140 can execute a specific operation as a radio base station that accommodates all UEs 200 (that is, regardless of the PLMN to which they belong) in a state of being under one or more (including a plurality of) PLMNs in such a state.

Alternatively, the control unit 140 may execute a specific operation as a radio base station that accommodates the UE 200 belonging to the specific mobile communication network and another mobile communication network other than the specific mobile communication network while managing the PLMN to which it belongs.

That is, the control unit 140 may accommodate the UE 200 belonging to (that is, connectable to) a specific mobile communication network (which may be referred to as a specific PLMN) and the UE 200 belonging to (that is, connectable to) another mobile communication network other than the specific PLMN, or may accommodate all the UEs 200 regardless of the PLMN to which the UE 200 belongs. "Accommodating the UE 200" may mean that various communication services can be provided to the UE 200 via the NCAP 100.

Such an NCAP 100 and a UE 200 may be referred to as an NCAP and a UE under the PLMN, and the UE 200 may be referred to as a UE under the NCAP. In addition, as described above, the PLMN may be interpreted as a network operator.

In the present embodiment, the NCAP 100 may belong to at least a specific mobile communication network. Therefore, the NCAP 100 may belong to one PLMN, or may belong to a plurality of PLMNs. Note that the term "belong to" may be simply read as "belong to", or may be read as a synonymous term such as "attribute".

The control unit 140 may execute the specific operation based on transmission and reception of information to and from a specific mobile communication network or another mobile communication network. Typically, the control unit 140 may execute the specific operation based on an exchange with a specific PLMN to which the NCAP 100 belongs. Examples of the exchange include permission of the specific operation, a SON function, a C-plane function of a CN, a U-plane function of a CN, and the like. Note that a specific example will be further described later.

The control unit 140 may execute an operation coordinated with at least one of another NCAP (communication device) belonging to the specific mobile communication network and another NCAP belonging to another mobile communication network. Specifically, the control unit 140 can coordinate only with an NCAP belonging to the same PLMN (network operator). In addition, the control unit 140 may coordinate with an NCAP having a different PLMN to which the control unit 140 belongs (in the case of belonging to a plurality of PLMNs, a part thereof may overlap). Note that an example of a specific coordination method will be described later.

The control unit 140 may assume that only the UE 200 belonging to the specific mobile communication network, or the UE 200 belonging to the specific mobile communication network and the UE 200 belonging to another mobile communication network to which another NCAP coordinated with the NCAP 100 belongs are connected to the NCAP 100.

Alternatively, the control unit 140 may assume that any UE is connected to the NCAP 100 regardless of the PLMN to which it belongs.

The control unit 140 can execute a specific operation in at least one of a C-plane of the NCAP 100 or the UE 200 related to the CN and a U-plane of the UE 200 related to the CN. The C-plane function and the U-plane function of the CN may include the following processing.

- C-plane function: device (apparatus) registration/connection, management/holding/processing related to a subscriber, subscriber (terminal) authentication processing, charging-related control, mobility management, and session management
- U-plane function: connection with an IP (Internet Protocol) network, authentication processing, IP packet routing, and priority control

As described above, the control unit 140 may execute a specific operation based on transmission and reception of information to and from a mobile communication network (PLMN) or another mobile communication network (PLMN) including a network on the network operator side (first communication network), and can apply a configuration related to communication in a resource or a frequency band common to each PLMN or a plurality of PLMNs.

Specifically, the control unit 140 can configure which frequency band is used (or is usable) for communication with the UE related to (belonging to) which PLMN. In addition, the control unit 140 can configure a method, a procedure, or a parameter related to communication in a common resource and/or a frequency band between PLMNs, or can configure a method, a procedure, and a parameter related to communication in an individual resource and/or a frequency band of the PLMN.

### (2.2) UE 200

As illustrated in Fig. 3, the UE 200 comprises a radio communication unit 210, a connection IF unit 220, and a control unit 230.

The radio communication unit 210 transmits and receives a radio signal according to 6G to and from the gNB 50 or the NCAP 100. Specifically, the radio communication unit 210 transmits a UL signal according to 6G, and receives a DL signal according to 6G. The radio communication unit 210 supports Massive MIMO, CA using a plurality of bundled CCs, DC performing communication simultaneously between the UE and each of two NG-RAN Nodes, and the like.

The connection IF unit 220 can provide an interface (IF) function for connecting a device for IIoT or URLLC or the like. The connection IF unit 220 is not essential, and may not be provided depending on the specifications of the UE 200. The IF provided by the connection IF unit 220 may be wired or wireless.

The control unit 230 controls the radio communication unit 210 and the connection IF unit 220. In particular, in the present embodiment, the control unit 230 can connect to the NCAP 100 when the NCAP 100 is executing a specific operation (operation as a network device accommodating the UE 200) without executing communication with a network on the network operator side.

Specifically, when the NCAP 100 is executing a specific operation (a connection request may be transmitted before execution) and the NCAP 100 belongs to the same PLMN as the PLMN to which the UE 200 belongs, the control unit 230 can connect to the NCAP 100 and receive provision of various communication services.

In addition, the control unit 230 may enable connection to another NCAP coordinated with the NCAP 100 belonging to the same PLMN as the PLMN to which the UE 200 belongs. Alternatively, the control unit 230 may connect to all NCAPs regardless of the PLMN to which the control unit 230 belongs.

### (2.3) gNB 50

As illustrated in Fig. 4, the gNB 50 comprises a radio communication unit 51, a network IF unit 53, and a control unit 55.

The radio communication unit 51 transmits and receives a radio signal according to 6G to and from the UE 200 or the NCAP 100. Specifically, the radio communication unit 51 transmits a DL signal according to 6G, and receives a UL signal according to 6G. The radio communication unit 51 supports Massive MIMO, CA using a plurality of bundled CCs, DC performing communication simultaneously between the UE and each of two NG-RAN Nodes, and the like. In the present embodiment, the radio communication unit 51 may configure a communication unit that executes radio communication with the NCAP 100.

In addition, the radio communication unit 51 may configure a reception unit that receives network information indicating a mobile communication network (PLMN) to which the NCAP 100 (communication device) can correspond from the core network (CN). Specifically, the network information may be configured by a list of PLMNs that can be supported by the NCAP 100. The PLMN compatible with the NCAP 100 may mean a PLMN that can be supported by the NCAP 100, is a connection to the PLMN, and/or is a PLMN to which the UE belongs and can allow connection of the UE.

The network IF unit 53 provides an interface function for connecting with a RAN node configuring a RAN and a node (function) configuring a CN. Specifically, the network IF unit 53 can provide an interface for connecting with an AMF/UPF or the like.

The control unit 55 controls each functional block configuring the gNB 50. In particular, in the present embodiment, the control unit 55 executes a configuration related to the PLMN with the NCAP 100 based on the above-described network information related to the PLMN received by the radio communication unit 51.

Specifically, the control unit 55 can control a UE to permit connection and/or a PLMN as a connection destination, according to the list of PLMNs indicated by the network information.

### (3) Operations of Radio Communication System

Next, operations of the radio communication system 10 will be described. Specifically, an operation related to correspondence to a plurality of PLMNs in a mobile communication network (NCAP network) including the NCAP 100 will be described.

### (3.1) Premise

In a conventional (for example, 5G) network configuration, a UE that can connect to a specific radio base station is basically limited to a UE under the network operator (or a UE permitted to roam to the network operator).

However, the relationship between the NCAP and a plurality of network operators, and the relationship between a UE connected to the NCAP network and the plurality of network operators are unknown. For example, the NCAP network is constructed at a location desired by a subscriber (customer) of a communication service, and it is not desirable that a UE connectable to the NCAP network is limited to a UE under a specific network operator.

Further, in the radio communication system 10, in order to further improve the utilization efficiency of existing frequency bands (which may include newly allocated high frequency bands), network sharing (resource sharing) may be applied in which a plurality of telecommunications carriers (network operators) share a RAN and realize the installation of a large number of radio base stations by sharing the investment cost for the network.

For example, it is assumed that station placement costs are shared by a plurality of business operators by sharing an antenna site (land, a steel tower, etc.). In addition, by sharing a DU (Distributed Unit)/CU (Central Unit) (sharing a hardware infrastructure), a deployment cost is shared by a plurality of business operators (however, confidentiality between business operators is maintained by making software independent), and resource utilization efficiency may be improved by sharing a frequency and a RU (Radio Unit) (for example, a resource not used by one business operator can be used by the other business operator).

When such network sharing is applied and a mechanism is applied in which UEs can connect widely without being limited to a specific PLMN in the NCAP network as described above, it is necessary to clarify a method of using a frequency (frequency band) while considering the following scenario.

- Scenario 1: A case where available frequency bands differ between PLMNs
- Scenario 2: A case where a frequency band is shared between PLMNs

Hereinafter, the relationship between the NCAP and a plurality of network operators, and the relationship between a UE connected to the NCAP network and the plurality of network operators will be described. For example, a mechanism in which a UE can widely connect in an NCAP network regardless of a PLMN to which the UE belongs will be described.

### (3.2) Operation Overview

In the NCAP network as illustrated in Fig. 1, a C-plane function and a U-plane function of a core network (CN) may be arranged as follows, for example.

- C-plane function of CN: in a network on a network operator side
- U-plane function of CN: in an NCAP 100 (or in a network on an NCAP 100 side)

Note that, as described above, the C-plane function and the U-plane function may include the following processing.

- C-plane function: device (apparatus) registration/connection, management/holding/processing related to a subscriber, subscriber (terminal) authentication processing, charging-related control, mobility management, and session management
- U-plane function: connection with an IP (Internet Protocol) network, authentication processing, IP packet routing, and priority control

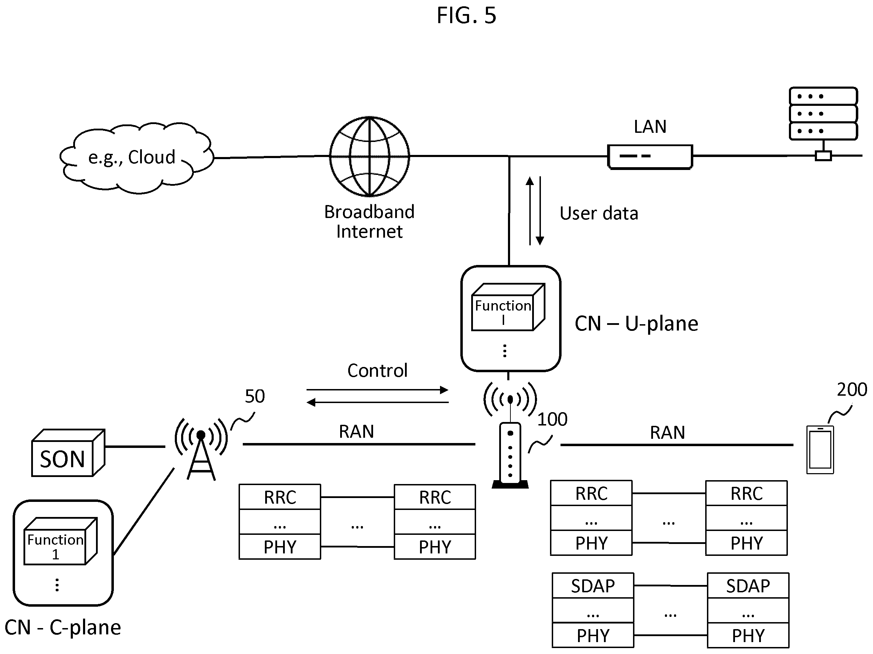

Fig. 5 illustrates an arrangement example (part 1) of a C-plane function and a U-plane function of a CN in a mobile communication network configured using the NCAP 100.

As illustrated in Fig. 5, when the NCAP 100 connects to a network operator, communication with a network on the network operator side may be executed via a RAN (using a RAT). Specifically, an exchange of information related to execution of a connection between the NCAP 100 and a network on the network operator side (for example, the gNB 50 or an AMF/SMF configuring a core network) may be executed by radio communication with the gNB 50, or the NCAP 100 may execute a connection operation as a UE.

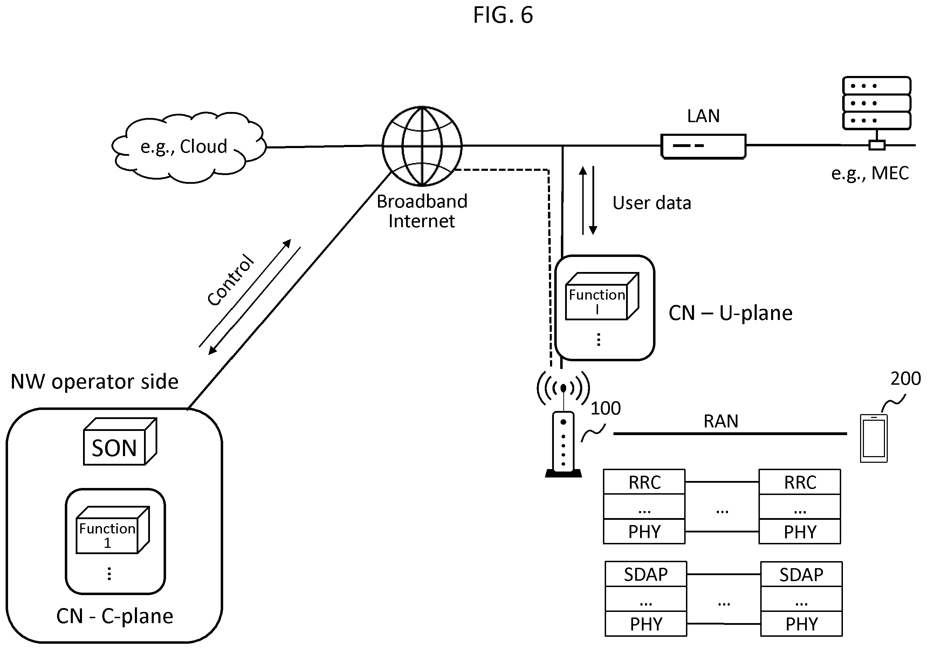

Fig. 6 illustrates an arrangement example (part 2) of a C-plane function and a U-plane function of a CN in a mobile communication network configured using the NCAP 100. Specifically, when the NCAP 100 connects to a network operator, communication with a network on the network operator side may be executed via a broadband Internet.

Even when the network architecture as illustrated in Fig. 5 and Fig. 6 is applied, the C-plane function of the CN (Function 1 in the drawings) may be arranged in the network on the network operator side, and the U-plane function of the CN (Function I in the drawings) may be arranged in the NCAP 100.

### (3.3) Operation Examples

### (3.3.1) Basic Operation Example

Regarding a plurality of network operators (PLMNs), the NCAP 100 and the UE 200 may operate as follows. Specifically, the NCAP 100 may operate under one or more network operators, and the UE 200 may connect to the NCAP 100 operating under one or more network operators. For example, when the NCAP 100 performs an operation (specific operation) as a network device accommodating the UE 200 (NW device, which may be interpreted as a radio base station in a narrow sense as described above), the NCAP 100 may enable all UEs 200 to connect to the NCAP 100 regardless of the PLMN to which the UE 200 belongs (as described above, may be replaced with a network operator).

Thereby, UEs capable of connecting to the NCAP network are not limited, and a highly flexible NCAP network can be constructed.

Note that, here, it may be assumed that the UE attempts to connect to PLMN #A (network operator A side). In addition, "common between business operators" may mean that telecommunications carriers are not distinguished, and may mean that the UE can use the PLMN regardless of the telecommunications carrier.

The PLMN may be an identifier related to (indicating) a telecommunications carrier, but is not limited thereto. Also, the "UE-common signal" may mean a signal common to a plurality of UEs or a signal based on a common resource setting, but does not necessarily mean that it is common among telecommunications carriers. When only "PLMN-common/PLMN-dedicated/UE-common/UE-dedicated" is described, any of configuration/resource/signal of the PLMN/UE may be meant.

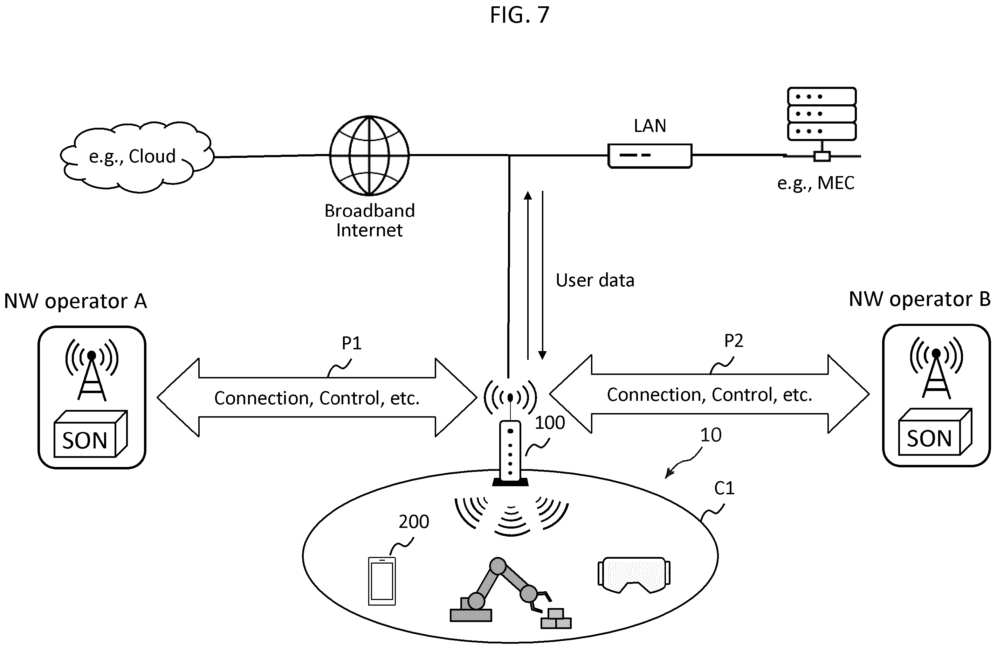

Fig. 7 illustrates a control operation example (part 1) of the NCAP 100 with a plurality of PLMNs.

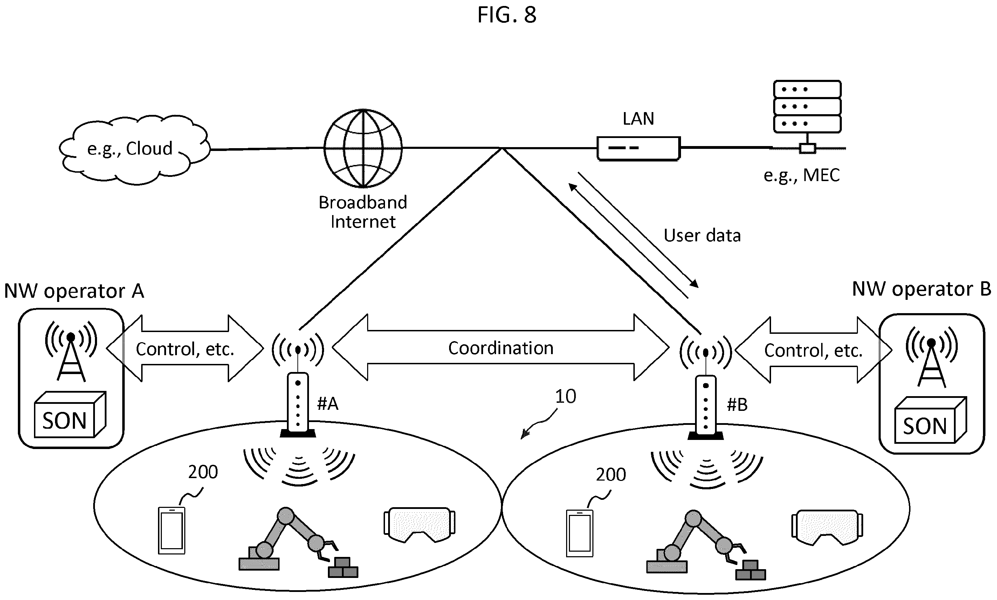

Fig. 8 illustrates a control operation example (part 2) of the NCAP 100 with a plurality of PLMNs.

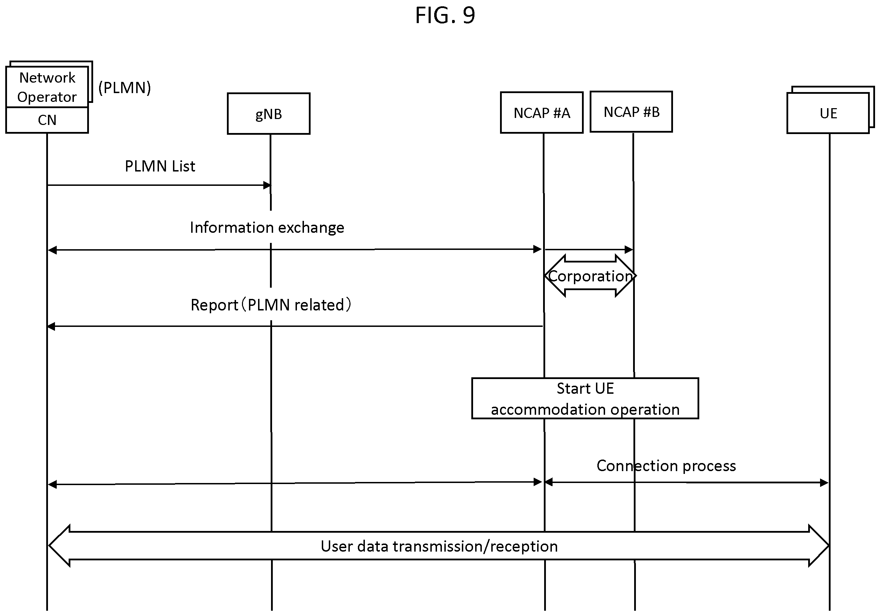

Fig. 9 illustrates an example of a communication sequence related to construction of an NCAP network. Note that the sequence illustrated in Fig. 9 indicates a part of a sequence relating to the following operation example, and the order of the sequences may be changed as appropriate, or a part of the sequence may be omitted.

### (3.3.2) Operation Example 1

Regarding a plurality of network operators, the NCAP 100 may be under a specific network operator. That is, the NCAP 100 may belong only to any one of the plurality of PLMNs. In this case, the NCAP 100 executes processing P1 such as connection and control with a network operator A, but may not execute processing P2 such as connection and control with a network operator B (see Fig. 7). This simplifies a control flow and reduces a processing load.

The NCAP 100 may execute a specific operation (also referred to as an operation X) as a radio base station accommodating the UE 200 based on an exchange (transmission and reception of information) with any one of the network operators.

Interactions with a network operator may include receiving permission of the operation X, transmitting and receiving information regarding a SON function, transmitting and receiving information regarding CN C-plane processing of the UE, and setting a CN U-plane (for example, session management). In this case, it may not be assumed that the NCAP 100 falls under a plurality of PLMNs. Information indicating that the NCAP 100 is under a specific PLMN may be notified to the UE 200.

On the other hand, the NCAP 100 is not prevented from belonging to a plurality of PLMNs. That is, the NCAP 100 can fall under a plurality of PLMNs. In this case, any PLMN may be selectively configured. The NCAP 100 may execute the operation X based on an exchange with at least any PLMN. Specifically, the NCAP 100 may operate according to at least one of the following.

- (a) Any network operator is used as a primary, and the operation X is executed based on an exchange with the primary network operator.

The primary may be determined based on a notification from the network operator, or may be determined by the NCAP and reported to the network operator.

- (b) Execute the operation X based on an exchange with all network operators.

- (c) A part of operations are executed based on an exchange with a primary network operator, and other operations are executed based on an exchange with all network operators.

For example, the following configuration is given.

- Permission of operation X: All (each) network operator
- Transmission and reception of information related to SON function: Primary network operator
- Transmission and reception of information related to CN C-plane processing of UE: All (each) network operator
- Configuration of CN U-plane (for example, session management): All (each) network operator
- Which frequency band is used (or usable) for communication with a UE related to (belonging to) which PLMN: All (each) or primary network operator
- Method, procedure, and parameter related to communication in resource/frequency band common between PLMNs: Primary network operator
- Method, procedure, and parameter related to communication in resource/frequency band specific to PLMN: All (each) or primary network operator

- (d) Report information regarding the operation X exchanged with a plurality of network operators to at least one of the network operators.

For example, the NCAP 100 may report various parameters to a SON function of a primary network operator. In addition, a notification regarding the operation X may be received from the SON function of the primary network operator.

- (e) The NCAP notifies a UE of a PLMN to which the NCAP is affiliated (may be one or a plurality).

- (f) Obtain a PLMN that may be affiliated (may be one or a plurality) (for example, a combination of network operators) from at least any network operator.

- (g) Report a PLMN that may be affiliated (may be one or a plurality) (for example, a combination of network operators) to at least any network operator.

Note that (f) and (g) may be executed at the time of handover of the NCAP 100 (when the NCAP 100 supports a handover function).

Through such an operation of the NCAP 100, the overall optimization of the radio communication system 10 can be realized more reliably, and a UE of a plurality of network operators can be flexibly accommodated.

### (3.3.3) Operation Example 2

When a network (NCAP network) is constructed using a plurality of NCAPs, the NCAP 100 may assume that cooperation is possible only between NCAPs under the same network operator. As a result, processing for constructing the NCAP network can be simplified.

Specifically, when each NCAP determines a cooperative destination NCAP, to which network operator the NCAP belongs may be notified to each other (D2D (Device to Device), via a network operator, via a broadband Internet, or via a LAN). When network operators are the same, each NCAP executes an operation necessary for coordination, and when network operators are different, they do not need to coordinate.

Further, when the network operator determines the cooperation destination NCAP, the NCAP 100 may assume that cooperation with another NCAP under the same network operator is notified.

Further, the cooperation may be applied in a case where a resource/frequency band common between PLMNs is not used, that is, a case where a different resource/frequency band is used for each PLMN.

Alternatively, the NCAP 100 may assume that cooperation is possible between NCAPs under different network operators (see Fig. 8). As a result, an optimal NCAP network can be flexibly constructed.

Specifically, when each NCAP determines an NCAP to be coordinated with, each NCAP may report information of a network operator to which the NCAP to be coordinated with belongs and/or various configuration parameters to a network operator to which the NCAP itself belongs (in the cases of (a) and (c) described above, a primary network operator may be used).

In addition, when the network operator determines the NCAP to be coordinated, each NCAP may report information of a network operator to which another NCAP belongs and/or various configuration parameters to a network operator to which the NCAP itself belongs (in the cases of (a) and (c) described above, a primary network operator may be used), or may notify coordination with an NCAP belonging to another network operator.

Control may be performed by a SON function under a network operator to which each NCAP belongs between cooperating NCAPs (various configuration parameters may be received). That is, a SON function may be linked between network operators.

Alternatively, all NCAPs may be controlled by a SON function under any network operator. That is, a SON function of any network operator may collectively control all NCAPs (and UEs).

Further, each NCAP may notify the UE of a network operator to which the currently-cooperating NCAP belongs. Note that the assumption that cooperation is possible between NCAPs under different network operators may be applied when a resource/frequency band common among PLMNs is used.

### (3.3.4) Operation Example 3

The UE 200 (or NCAP 100) may operate according to any of the following with respect to connection with the NCAP 100.

- (z) The NCAP transmits a signal for UE connection based on the PLMN.

- (z1) The NCAP may independently transmit a synchronization signal, a broadcast signal, and the like, and receive a UL signal for initial access for each PLMN.

In this case, a frequency resource may be different for each PLMN, or a signal corresponding to which PLMN may be notified to the UE. In addition, a time resource may be different for each PLMN, or a signal corresponding to which PLMN may be notified to the UE.

- (z2) The NCAP may perform transmission of a synchronization signal, a broadcast signal, and the like common to a plurality of PLMNs, that is, common to telecommunications carriers of the cell X, and/or receive a UL signal for initial access common to a plurality of PLMNs.

In this case, the UE may be notified that the cell is a specific cell (cell X) via any one of a PDCCH (Physical Downlink Control Channel) 0 (CORESET (control resource sets) 0), an SIB1, an SIBX (other SIBs), an Msg2 (RAR: Random Access Response) PDSCH, an Msg4 PDCCH, and an Msg4 (Contention Resolution) PDSCH (Physical Downlink Shared Channel).

The UE may execute an operation related to connection to a cell X. Note that the Access category may indicate a cell X, and in a non-cell X (other than a cell X), a signaling used for PLMN notification may indicate a cell X instead of a PLMN. Further, the UE may receive information related to the cell X via the connected non-cell X. When the cell X is used as a secondary cell (SCell), at least a part of a UE-common signal of the cell X may be assumed to be common among telecommunications carriers.

The NCAP may also notify a PLMN set to a UE. In the SIB1 or SIBX, the RAR may be notified that the PLMN set is included. When the PLMN information is not included in the SIB1 or SIBX, or when the PRACH resource is common between telecommunications carriers, the RAR may be assumed to include the PLMN set.

The NCAP may include, in the PLMN set, a PLMN to which the NCAP itself belongs, and may include another PLMN (for example, a coordinating PLMN) in the PLMN set. Also, the NCAP may include, in the PLMN set, a PLMN notified from a NW operator/BS/SON mechanism. The PLMN set may be identical to or different from the above-described PLMN set. Also, the PLMN set may be called a PLMN list.

Further, a target signal in this case may be any one of PDCCH0 (CORESET0)/SIB1/SIBX (other SIBs)/Msg2 PDSCH/Msg4 PDCCH/Msg4 PDSCH, PRACH/Msg3 PUSCH/HARQ (Hybrid automatic repeat request)-ACK for Msg4 PDSCH.

- (a) The UE connects only to an NCAP under a network operator to which the UE belongs.

- (b) The UE connects to an NCAP under a network operator to which the UE belongs or to an NCAP cooperating with the NCAP.

- (c) The UE is connectable to any NCAP regardless of which network operator the NCAP belongs to.

- (y) The UE may execute the following operation as an operation corresponding to (z2) described above.

- The UE receives an inter-operator common SSB of a cell X, and receives, in a PBCH/MIB, a PLMN set capable of connecting to the cell and a configuration related to communication for each PLMN.

- The UE receives an SS/PBCH/MIB/SIB1 common among telecommunications carriers of the cell X, and receives a PLMN set connectable to the cell and a configuration regarding communication for each PLMN in the SIB1.

- The UE receives an SS/PBCH/MIB/SIB1/SIBX common among telecommunications carriers of the cell X, and receives a PLMN set connectable to the cell and a configuration regarding communication for each PLMN in the SIBX.

- The UE receives an SS/PBCH/MIB/SIB1 and/or SIBX common among telecommunications carriers of the cell X, and transmits a PRACH using a PRACH resource common among the telecommunications carriers. In the subsequent RAR, the UE receives a PLMN set capable of connecting to the cell and a configuration related to communication for each PLMN.

- The UE receives an SS/PBCH/MIB/SIB1 and/or SIBX common among telecommunications carriers of the cell X, and transmits a PRACH using a PRACH resource common among the telecommunications carriers.

- The UE completes up to transmission of an Msg3 PUSCH based on a configuration common among telecommunications carriers. In a subsequent Msg4 PDSCH, the UE receives a PLMN set capable of connecting to the cell and a configuration regarding communication for each PLMN.

- (d) The NCAP notifies the network operator to which the UE belongs of the network operator to which the NCAP belongs.

In this case, the NCAP and the UE may assume that processing for the UE is executed between network operators.

- (e) When a UE belongs to a network operator that is not a network operator to which an NCAP itself belongs (or a primary network operator), the NCAP notifies another NCAP under a network operator to which the UE belongs or a network operator to which the UE belongs of information of the UE.

The other NCAP may report the information of the UE to a network operator to which the NCAP itself belongs.

- (f) After the operation (d) or (e), the NCAP may receive a notification relating to connection of the UE from a network operator to which the NCAP itself belongs, an NCAP under a network operator to which the UE belongs, or a network operator to which the UE belongs.

- (g) After the UE connects in (f), the NCAP may execute the operation (d) or (e) for information regarding communication of the UE.

- (h) Which operation to execute may be preset in the NCAP or may be designated from the network operator side.

When the UE 200 executes such an operation, the NCAP 100 can operate based on control (instruction) of the network operator to which the UE 200 belongs, can simplify processing for constructing an NCAP network, and can realize a flexible UE connection configuration.

### (3.3.5) Operation Example 4

Regarding a plurality of network operators, a core network (CN) of any network operator may transmit a list of PLMNs corresponding to the NCAP 100 to the gNB 50.

That is, on the CN side, an authentication/permission process related to the above-described measurement or reporting may be executed. Specifically, the CN may be an AMF or another CN function that executes an authentication process or the like, but is not limited thereto, and may be another function on the network operator side.

Further, transmission of the list may be an existing NG interface, or may be another interface other than the NG interface.

The CN may also transmit methods, procedures, parameters, and the like related to communication in a resource/frequency band common to PLMNs. Further, the CN may also transmit methods, procedures, parameters, and the like related to communication in a resource/frequency band specific to a PLMN.

### (4) Operations and Effects

According to the above-described embodiment, the NCAP 100 can construct an NCAP network corresponding to a situation regardless of a network operator (PLMN) to which the NCAP itself and/or the UE itself belongs, and therefore can accommodate a wide variety of UEs in the NCAP network. As a result, a highly flexible NCAP network can be reliably constructed.

### (5) Other Embodiments

Although the embodiment has been described above, the present disclosure is not limited to the description of the embodiment, and it is obvious to those skilled in the art that various modifications and improvements can be made.

For example, in the above-described embodiment, the description has been given on the assumption that connection can be made to a server for MEC and a broadband Internet via a LAN, but the LAN may be set on the same segment, or may be a physically or logically separated different LAN.

In addition, in the above-described embodiment, the NCAP 100 is connected to both the network on the network operator side (first communication network) and the LAN (second communication network), but may be connected to only one of the networks. In addition, the UE 200 connecting to the network configured by the NCAP 100 may or may not be separately connected to a radio base station on the network operator side. The operation of the NCAP 100 and/or the UE 200 may differ based on the presence or absence of the connection. In addition, in the network configured by the NCAP 100, a licensed band may be used, or an unlicensed band may be used.

Furthermore, the block configuration diagrams (Fig. 2 to Fig. 4) used for describing the above-described embodiment illustrate blocks in functional units. These functional blocks (components) are implemented by any combination of hardware and/or software. Furthermore, an implementation method of each functional block is not particularly limited. That is, each functional block may be implemented using one physically or logically coupled device, or two or more physically or logically separated devices may be directly or indirectly (for example, using wired, wireless, or the like) connected and implemented using the plurality of devices. The functional block may be implemented by combining software with the one device or the plurality of devices.

Functions include judging, determining, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like, but are not limited thereto. For example, a functional block (component) that makes a transmission function is referred to as a transmitting unit or a transmitter. In any case, as described above, an implementation method is not particularly limited.

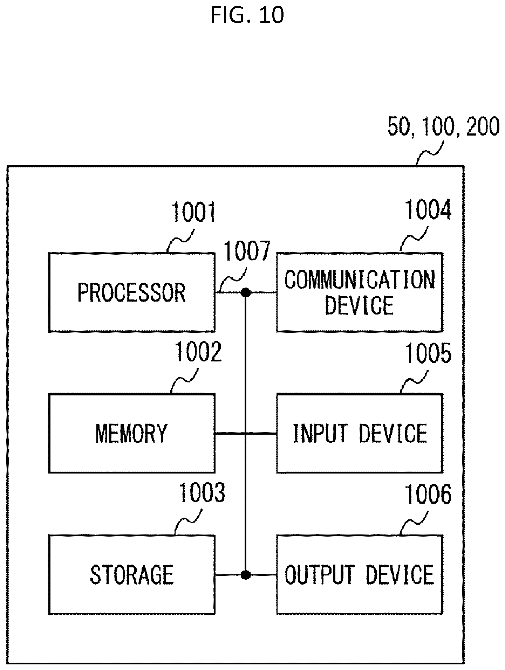

Furthermore, the above-described NCAP 100, UE 200, and gNB 50 may function as a computer that performs processing of the radio communication method of the present disclosure. Fig. 10 is a diagram showing an example of a hardware configuration of the NCAP 100, the UE 200, and the gNB 50. As illustrated in Fig. 10, the NCAP 100, the UE 200, and the gNB 50 may be configured as a computer device including a processor 1001, a memory 1002, a storage 1003, a communication device 1004, an input device 1005, an output device 1006, a bus 1007, and the like.

In the following description, the term "device" can be read as a circuit, a device, a unit, or the like. The hardware configuration of the device may be configured to include one or a plurality of the devices illustrated in the drawings, or may be configured to not include a part of the devices.

Each functional block (see Fig. 2 to Fig. 4) of the NCAP 100, the UE 200, and the gNB 50 is implemented by any hardware element of the computer device or a combination of the hardware elements.

In addition, each function in the NCAP 100, the UE 200, and the gNB 50 is implemented by causing hardware such as the processor 1001 and the memory 1002 to read predetermined software (program), thereby causing the processor 1001 to perform calculation and control communication by the communication device 1004, or controlling at least one of reading and writing of data in the memory 1002 and the storage 1003.

The processor 1001 controls the entire computer by operating an operating system, for example. The processor 1001 may be configured by a central processing unit (CPU) including an interface with a peripheral device, a control device, an arithmetic device, a register, and the like.

Furthermore, the processor 1001 reads a program (program code), a software module, data, and the like from at least one of the storage 1003 and the communication device 1004 into the memory 1002, and executes various processes according to these. As the program, a program that causes a computer to execute at least a part of the operations described in the above-described embodiment is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunications line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, and the like capable of executing the method according to the embodiment of the present disclosure.

The storage 1003 is a computer-readable recording medium, and may be configured by at least one of an optical disc such as a Compact Disc ROM (CD-ROM), a hard disk drive, a flexible disk, a magneto-optical disc (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The storage 1003 may be referred to as an auxiliary storage device. The above-described recording medium may be an appropriate medium such as a database, a server, or the like including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like.

The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, or the like) that accepts an input from the outside. The output device 1006 is an output device (for example, a display, a speaker, an LED lamp, or the like) that executes an output to the outside. The input device 1005 and the output device 1006 may be configured integrally (for example, a touch panel).

In addition, devices such as the processor 1001 and the memory 1002 are connected by a bus 1007 for communicating information. The bus 1007 may be configured using a single bus, or may be configured using different buses between devices.

Furthermore, the device may be configured to include hardware such as a microprocessor, a Digital Signal Processor (DSP), an Application Specific Integrated Circuit (ASIC), a Programmable Logic Device (PLD), or a Field Programmable Gate Array (FPGA), and a part or all of each functional block may be realized by the hardware. For example, the processor 1001 may be implemented using at least one of these hardware.

Further, the notification of information is not limited to the aspects/embodiments described in the present disclosure, and may be performed using another method. For example, notification of information may be performed by physical layer signaling (e.g., Downlink Control Information (DCI), Uplink Control Information (UCI)), higher layer signaling (e.g., RRC signaling, Medium Access Control (MAC) signaling, broadcast information (Master Information Block (MIB), System Information Block (SIB))), other signals, or a combination thereof. In addition, the RRC signaling may be referred to as an RRC message, and may be, for example, an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using another appropriate system, and a next-generation system extended based on these. Further, a plurality of systems may be combined (for example, a combination of at least one of LTE and LTE-A and 5G) and applied.

The processing procedure, sequence, flowchart, and the like of each aspect/embodiment described in the present disclosure may be reordered as long as there is no contradiction. For example, for the methods described in the present disclosure, elements of various steps are presented using an exemplary order, and are not limited to the specific order presented.

A specific operation described in the present disclosure as being performed by a base station may be performed by an upper node in some cases. In a network configured by one or more network nodes having a base station, it is clear that various operations performed for communication with a terminal can be performed by at least one of a base station and another network node other than the base station (for example, MME or S-GW may be considered, but is not limited thereto). The case where there is one network node other than the base station is illustrated above, but a combination of a plurality of other network nodes (for example, MME and S-GW) may be used.

Information, a signal (information or the like) can be output from an upper layer (or a lower layer) to a lower layer (or an upper layer). They may be input and output via a plurality of network nodes.

The input and output information may be stored in a specific location (for example, a memory) or may be managed using a management table. The input and output information can be overwritten, updated, or appended. The output information may be deleted. The input information may be transmitted to another device.

The determination may be performed using a value represented by one bit (0 or 1), a truth value (Boolean: true or false), or comparison of numerical values (for example, comparison with a predetermined value).

Each aspect/embodiment described in the present disclosure may be used alone, in combination, or may be switched and used in accordance with execution. Furthermore, notification of predetermined information (for example, notification of "being X") is not limited to being performed explicitly, but may be performed implicitly (for example, not performing notification of the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, and the like, regardless of whether they are called software, firmware, middleware, microcode, a hardware description language, or other names.

Also, software, instructions, information, and the like may be transmitted and received via a transmission medium. For example, when software is transmitted from a website, server, or other remote source using wired technologies (coaxial cables, optical fiber cables, twisted pairs, Digital Subscriber Lines (DSL), etc.) and/or wireless technologies (infrared, microwaves, etc.), these wired technologies and/or wireless technologies are included within the definition of the transmission medium.

Information, signals, and the like described in the present disclosure may be expressed using any of various different techniques. For example, data, instructions, commands, information, signals, bits, symbols, chips, and the like that may be mentioned throughout the above description may be represented by a voltage, current, electromagnetic wave, magnetic field or magnetic particle, optical field or photon, or an arbitrary combination thereof.

The terms described in the present disclosure and terms necessary for understanding the present disclosure may be replaced with terms having the same or similar meanings. For example, at least one of a channel and a symbol may be a signal (signaling). Further, the signal may be a message. Also, a Component Carrier (CC) may be referred to as a carrier frequency, a cell, a frequency carrier, or the like.

The terms "system" and "network" as used in the present disclosure are used interchangeably.

Furthermore, the information, parameters, and the like described in the present disclosure may be represented using an absolute value, may be represented using a relative value from a predetermined value, or may be represented using other corresponding information. For example, a radio resource may be indicated by an index.

Names used for the parameters described above are not limiting names in any respect. Furthermore, mathematical formulas and the like using these parameters may differ from those explicitly disclosed in the present disclosure. Since the various channels (e.g., PUCCH, PDCCH, etc.) and information elements can be identified by any suitable name, the various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be called by a term such as a macro cell, a small cell, a femto cell, or a pico cell.

A base station can accommodate one or a plurality of (e.g., three) cells (also referred to as sectors). When a base station accommodates a plurality of cells, the entire coverage area of the base station can be partitioned into a plurality of smaller areas, and each smaller area can also provide a communication service by a base station subsystem (for example, a small indoor base station (Remote Radio Head: RRH)).

The term "cell" or "sector" refers to part or all of a coverage area of at least one of a base station and a base station subsystem that performs a communication service in this coverage.

In the present disclosure, that a base station transmits information to a terminal may be read as that a base station instructs a terminal to perform control/operation based on the information.

In the present disclosure, terms such as "Mobile Station (MS)", "user terminal", "User Equipment (UE)", and "terminal" may be used interchangeably.

A mobile station may also be referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terminology.

At least one of the base station and the mobile station may be called a transmission device, a reception device, a communication device, and the like. Note that at least one of the base station and the mobile station may be a device mounted on a moving body, the moving body itself, and the like. The moving object may be a vehicle (for example, an automobile, an airplane, etc.), may be an unmanned moving object (for example, a drone, an autonomous driving vehicle, etc.), or may be a robot (manned type or unmanned type). Note that at least one of the base station and the mobile station includes a device that does not necessarily move during a communication operation. For example, at least one of the base station and the mobile station may be an Internet of Things (IoT) device such as a sensor.

In addition, a base station in the present disclosure may be replaced with a mobile station (user terminal, the same applies hereinafter). For example, each aspect/embodiment of the present disclosure may be applied to a configuration in which communication between a base station and a mobile station is replaced with communication between a plurality of mobile stations (e.g., may be referred to as Device-to-Device (D2D), Vehicle-to-Everything (V2X), etc.). In this case, a configuration in which a mobile station has functions possessed by a base station may be adopted. Further, terms such as "uplink" and "downlink" may be replaced with terms corresponding to inter-terminal communication (for example, "side"). For example, an uplink channel, a downlink channel, and the like may be read as a side channel (or a side link).

Similarly, the mobile station in the present disclosure may be read as a base station. In this case, a configuration in which a base station has functions possessed by a mobile station may be adopted.

A radio frame may be configured by one or a plurality of frames in the time domain. Each of the one or plurality of frames in the time domain may be called a subframe. A subframe may be further configured by one or a plurality of slots in the time domain. The subframe may have a fixed time length (for example, 1 ms) independent of a numerology.

The numerology may be a communication parameter applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, a specific filtering process performed by a transceiver in a frequency domain, and a specific windowing process performed by a transceiver in a time domain.

A slot may be configured by one or a plurality of symbols (Orthogonal Frequency Division Multiplexing (OFDM) symbols, Single Carrier Frequency Division Multiple Access (SC-FDMA) symbols, etc.) in a time domain. A slot may be a unit of time based on a numerology.

A slot may contain a plurality of minislots. Each minislot may be composed of one or more symbols in the time domain. Further, a minislot may be called a subslot. The minislot may be composed of a smaller number of symbols than the slot. A PDSCH (or PUSCH) transmitted in a time unit larger than the minislot may be referred to as a PDSCH (or PUSCH) mapping type A. A PDSCH (or PUSCH) transmitted using the minislot may be referred to as a PDSCH (or PUSCH) mapping type B.

Radio frames, subframes, slots, minislots, and symbols all represent time units when transmitting signals. Another corresponding name may be used for the radio frame, the subframe, the slot, the minislot, and the symbol.

For example, one subframe may be called a Transmission Time Interval (TTI), a plurality of consecutive subframes may be called a TTI, and one slot or one minislot may be called a TTI. That is, at least one of the subframe and the TTI may be a subframe (1 ms) in existing LTE, may be a period shorter than 1 ms (for example, 1 to 13 symbols), or may be a period longer than 1 ms. Note that a unit representing the TTI may be called a slot, a minislot, or the like instead of a subframe.

Here, the TTI means a minimum time unit of scheduling in radio communication, for example. For example, in an LTE system, a base station schedules allocation of radio resources (such as a frequency bandwidth and transmission power that can be used in each user terminal) in TTI units for each user terminal. The definition of TTI is not limited to this.

The TTI may be a transmission time unit of a channel-encoded data packet (transport block), code block, codeword, or the like, or may be a processing unit of scheduling, link adaptation, or the like. Note that, when a TTI is given, a time section (for example, the number of symbols) in which a transport block, a code block, a codeword, and the like are actually mapped may be shorter than the TTI.

Note that when one slot or one minislot is called a TTI, one or more TTIs (that is, one or more slots or one or more minislots) may be a minimum time unit of scheduling. Also, the number of slots (the number of minislots) constituting the minimum time unit of the scheduling may be controlled.

A TTI having a time length of 1 ms may be called a normal TTI (TTI in LTE Rel. 8-12), a normal TTI, a long TTI, a normal subframe, a normal subframe, a long subframe, a slot, or the like. A TTI shorter than the normal TTI may be called a shortened TTI, a short TTI, a partial TTI (partial or fractional TTI), a shortened subframe, a short subframe, a minislot, a subslot, a slot, or the like.

Note that a long TTI (for example, a normal TTI, a subframe, or the like) may be read as a TTI having a time length exceeding 1 ms, and a short TTI (for example, a shortened TTI, or the like) may be read as a TTI having a TTI length less than a long TTI and having a TTI length of 1 ms or more.

A Resource Block (RB) is a resource allocation unit in a time domain and a frequency domain, and may include one or a plurality of continuous subcarriers in the frequency domain. The number of subcarriers included in the RB may be the same regardless of a numerology, and may be, for example, 12. The number of subcarriers included in the RB may be determined based on a numerology.

The time domain of the RB may include one or a plurality of symbols, and may have a length of one slot, one minislot, one subframe, or one TTI. One TTI, one subframe, and the like may each be composed of one or a plurality of resource blocks.

One or a plurality of RBs may be referred to as a physical resource block (Physical RB: PRB), a subcarrier group (Sub-Carrier Group: SCG), a resource element group (Resource Element Group: REG), a PRB pair, an RB pair, or the like.

Further, the resource block may be configured by one or a plurality of resource elements (Resource Elements: REs). For example, 1 RE may be a radio resource area of 1 subcarrier and 1 symbol.

A bandwidth part (Bandwidth Part: BWP) (may be referred to as a partial bandwidth or the like) may represent a subset of continuous common resource blocks (common RBs) for a certain numerology in a certain carrier. Here, the common RB may be identified by an RB index with reference to a common reference point of the carrier. A PRB may be defined in a certain BWP and numbered in the BWP.

The BWP may include a BWP for UL (UL BWP) and a BWP for DL (DL BWP). One or a plurality of BWPs may be configured in one carrier for a UE.

At least one of the configured BWPs may be active, and the UE does not have to assume that a predetermined signal/channel is transmitted and received outside the active BWP. Note that "cell", "carrier", and the like in the present disclosure may be read as "BWP".

Structures of the radio frame, subframe, slot, minislot, symbol, and the like described above are merely examples. For example, the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, a cyclic prefix (Cyclic Prefix: CP) length, and the like can be variously modified.

The terms "connected", "coupled", or any variation thereof refer to any direct or indirect connection or coupling between two or more elements and can include the presence of one or more intermediate elements between two elements that are "connected" or "coupled" to each other. The coupling or connection between the elements may be physical, logical, or a combination thereof. For example, "connection" may be read as "access". As used in this disclosure, two elements can be considered to be "connected" or "coupled" to each other using at least one of one or more electrical wires, cables, and printed electrical connections, and, by way of several non-limiting and non-exhaustive examples, electromagnetic energy having wavelengths in the radio frequency, microwave, and optical (both visible and invisible) ranges.

The reference signal can also be abbreviated as a Reference Signal (RS), and may be called a pilot depending on applied standards.

The phrase "based on" as used in the present disclosure does not mean "based only on" unless otherwise specified. In other words, the phrase "based on" means both "based only on" and "based at least on".

### "Means" in the configuration of each device described above may be replaced with a "unit", a "circuit", a "device", or the like.

Any reference to an element using terms such as "first", "second", etc. as used in the present disclosure does not generally limit the amount or order of those elements. These designations may be used in the present disclosure as a convenient method of distinguishing between two or more elements. Thus, a reference to first and second elements does not imply that only two elements can be employed there or that the first element must precede the second element in some way.

When "include", "including", and variations thereof are used in the present disclosure, these terms are intended to be inclusive, similar to the term "comprising". Furthermore, the term "or" used in the present disclosure is intended not to be an exclusive OR.

When articles are added by translation in the present disclosure, for example, "a," "an," and "the" in English, the present disclosure may include that nouns following these articles are plural.

The terms "determining" and "determining" used in the present disclosure may encompass a wide variety of operations. The "determining" and "determining" may include, for example, assuming that a judgment, a calculation, a computation, a processing, a derivation, an investigating, a looking up, a search, an inquiry (for example, a search in a table, a database, or another data structure), or an ascertaining is "determined" or "determined". Also, "determining" and "determining" may include regarding receiving (e.g., receiving information), transmitting (e.g., transmitting information), input, output, and accessing (e.g., accessing data in a memory) as "determining" and "determining". Also, "determining" and "determining" may include assuming that resolving, selecting, choosing, establishing, comparing, etc. is "determined" and "determined". In other words, "determining" and "determining" may include assuming that some operation is "determined" and "determined". Also, "determining" may be read as "assuming", "expecting", "considering", or the like.

In the present disclosure, the term "A and B are different" may mean that A and B are different from each other. The term may mean that "A and B are respectively different from C". Terms such as "leave" and "coupled" may be interpreted in the same manner as "different".

Although the present disclosure has been described in detail above, it will be obvious to those skilled in the art that the present disclosure is not limited to the embodiments described in the present disclosure. The present disclosure can be implemented as modified and changed aspects without departing from the spirit and scope of the present disclosure defined by the description of the claims. Therefore, the description of the present disclosure is intended for illustrative explanation, and does not have any restrictive meaning on the present disclosure.

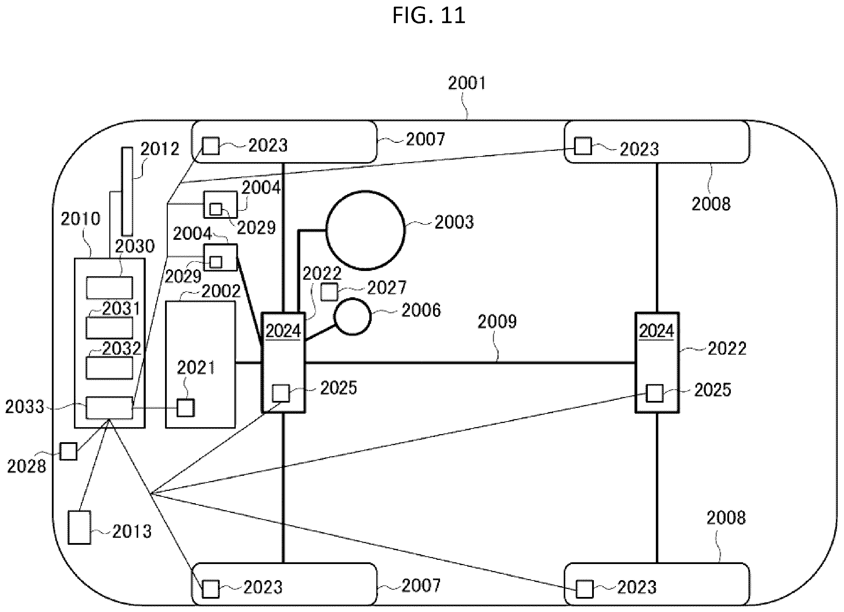

Fig. 11 illustrates a configuration example of a vehicle 2001. As illustrated in Fig. 11, the vehicle 2001 comprises a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor. The steering unit 2003 includes at least a steering wheel (also referred to as a handle), and is configured to steer at least one of the front wheels and the rear wheels based on an operation of the steering wheel operated by a user. The electronic control unit 2010 is configured by a microprocessor 2031, a memory (ROM, RAM) 2032, and a communication port (IO port) 2033. The electronic control unit 2010 receives signals from various sensors 2021 to 2027 provided in the vehicle. The electronic control unit 2010 may be referred to as an ECU (Electronic Control Unit).

Signals from the various sensors 2021 to 2028 include a current signal from a current sensor 2021 that senses an electric current of a motor, rotation speed signals of front wheels and rear wheels acquired by a rotation speed sensor 2022, pneumatic signals of front wheels and rear wheels acquired by a pneumatic sensor 2023, a vehicle speed signal acquired by a vehicle speed sensor 2024, an acceleration signal acquired by an acceleration sensor 2025, a depression amount signal of an accelerator pedal acquired by an accelerator pedal sensor 2029, a depression amount signal of a brake pedal acquired by a brake pedal sensor 2026, an operation signal of a shift lever acquired by a shift lever sensor 2027, a detection signal for detecting an obstacle, a vehicle, a pedestrian, and the like acquired by an object detection sensor 2028, and the like.

The information service unit 2012 is configured by various devices for providing (outputting) various information such as driving information, traffic information, and entertainment information, such as a car navigation system, an audio system, a speaker, a television, and a radio, and one or more ECU controlling these devices. The information service unit 2012 provides various multimedia information and multimedia services to a passenger of the vehicle 1 using information acquired from an external device via the communication module 2013 or the like.

The information service unit 2012 may include an input device (for example, a keyboard, a mouse, a microphone, a switch, a button, a sensor, a touch panel, or the like) that accepts input from the outside, or may include an output device (for example, a display, a speaker, an LED lamp, a touch panel, or the like) that performs output to the outside.

The driving assistance system unit 2030 is composed of various devices for providing functions for preventing accidents in advance or reducing the driving load of a driver, such as a millimeter wave radar, Light Detection and Ranging (LiDAR), a camera, a positioning locator (e.g., GNSS, etc.), map information (e.g., High Definition (HD) map, Autonomous Vehicle (AV) map, etc.), a gyro system (e.g., Inertial Measurement Unit (IMU), Inertial Navigation System (INS), etc.), an Artificial Intelligence (AI) chip, and an AI processor, and one or more ECUs controlling these devices. Also, the driving assistance system unit 2030 transmits and receives various information via the communication module 2013 to realize a driving support function or an autonomous driving function.

The communication module 2013 can communicate with the microprocessor 2031 and components of the vehicle 1 via a communication port. For example, the communication module 2013 transmits and receives data to and from a drive unit 2002, a steering unit 2003, an accelerator pedal 2004, a brake pedal 2005, a shift lever 2006, left and right front wheels 2007, left and right rear wheels 2008, an axle 2009, a microprocessor 2031 and a memory (ROM, RAM) 2032 in the electronic control unit 2010, and the sensors 2021 to 2028 included in the vehicle 2001 via the communication port 2033.

The communication module 2013 is a communication device that can be controlled by the microprocessor 2031 of the electronic control unit 2010 and can communicate with an external device. For example, various information is transmitted to and received from an external device via wireless communication. The communication module 2013 may be inside or outside the electronic control unit 2010. The external device may be, for example, a base station, a mobile station, or the like.

The communication module 2013 may transmit at least one of signals from the above-described various sensors 2021 to 2028 input to the electronic control unit 2010, information obtained based on the signals, and information based on an input from the outside (user) obtained via the information service unit 2012 to an external device via wireless communication. The electronic control unit 2010, the various sensors 2021 to 2028, the information service unit 2012, and the like may be referred to as an input unit that receives an input. For example, a PUSCH transmitted by the communication module 2013 may include information based on the input.

The communication module 2013 receives various information (traffic information, signal information, inter-vehicle information, etc.) transmitted from an external device and displays it on the information service unit 2012 provided in the vehicle. The information service unit 2012 may be referred to as an output unit that outputs information (for example, outputs information to a device such as a display or a speaker based on a PDSCH received by the communication module 2013 (or data/information decoded from the PDSCH)). Further, the communication module 2013 stores various information received from the external device in the memory 2032 available to the microprocessor 2031. Based on the information stored in the memory 2032, the microprocessor 2031 performs control of the drive unit 2002, steering unit 2003, accelerator pedal 2004, brake pedal 2005, shift lever 2006, left and right front wheels 2007, left and right rear wheels 2008, axle 2009, sensors 2021 to 2028, and the like provided in the vehicle 2001.

### (Supplementary Notes)

The above disclosure may be expressed as follows. A first feature is a communication device comprising: a communication unit that executes communication with a first communication network and a second communication network, and radio communication with a terminal; and a control unit that executes a specific operation as a radio base station that accommodates the terminal belonging to a mobile communication network including the first communication network and the terminal belonging to another mobile communication network other than the mobile communication network, wherein the communication unit transmits a connection signal corresponding to each of the mobile communication networks to the terminal.

A second feature is the communication device according to the first feature, wherein the communication unit transmits or receives the connection signal independent for each mobile communication network.

A third feature is the communication device according to the first or second feature, wherein the communication unit transmits or receives the connection signal common to the plurality of mobile communication networks.

A fourth feature is the communication device according to any one of the first to third features, wherein the control unit executes the specific operation based on transmission and reception of information to and from the mobile communication network or the other mobile communication network, and applies a configuration related to communication in a resource or a frequency band common to each mobile communication network or a plurality of mobile communication networks.

### DESCRIPTION OF REFERENCE NUMERALS

10 Radio communication system
50 gNB
51 Radio communication unit
53 Network IF unit
55 Control unit
100 NCAP
110 First communication unit
120 Second communication unit
130 Third communication unit
140 Control unit
200 UE
210 Radio communications unit
220 Connection IF unit
230 Control unit
C1 Cell
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port

## Claims

1. A communication device comprising:
a communication unit that executes communication with a first communication network and a second communication network, and executes radio communication with a terminal; and
a control unit that executes a specific operation as a radio base station that accommodates the terminal belonging to a mobile communication network including the first communication network, and the terminal belonging to another mobile communication network other than the mobile communication network, wherein
the communication unit transmits a connection signal corresponding to each of the mobile communication networks to the terminal.

2. The communication device according to claim 1, wherein the communication unit transmits or receives the connection signal independent for each of the mobile communication networks.

3. The communication device according to claim 1, wherein the communication unit transmits or receives the connection signal common to the plurality of the mobile communication networks.

4. The communication device according to claim 1, wherein
the control unit:
executes the specific operation based on transmission and reception of information to and from the mobile communication network or the other mobile communication network; and
applies a configuration related to communication in a resource or a frequency band common to each of the mobile communication networks or a plurality of the mobile communication networks.

5. A communication method comprising the steps of:
executing communication with a first communication network and a second communication network, and radio communication with a terminal;
executing a specific operation as a radio base station that accommodates the terminal belonging to a mobile communication network including the first communication network, and the terminal belonging to another mobile communication network other than the mobile communication network; and
transmitting a connection signal corresponding to each of the mobile communication networks to the terminal.
